# EUROPÄISCHE PATENTSCHRIFT

(11) **EP 3 737 950 B1**
(45) Veröffentlichungstag und Bekanntmachung des Hinweises auf die Patenterteilung: **14.08.2024**
(21) Anmeldenummer: 19700454.2
(22) Anmeldetag: 08.01.2019
(51) Int. Cl.: G01P 1/02

(54) **GESCHWINDIGKEITSSENSOR MIT ISOLIERENDEN INNEREN UND ÄUSSEREN AUSNEHMUNGEN**
SPEED SENSOR COMPRISING INSULATING INNER AND OUTER RECESSES
CAPTEUR DE VITESSE MUNI D'ÉVIDEMENTS ISOLANTS INTÉRIEURS ET EXTÉRIEURS

(30) Priorität: 12.01.2018 DE 102018000221
(43) Veröffentlichungstag der Anmeldung: 18.11.2020
(73) Patentinhaber: KNORR-BREMSE Systeme für Nutzfahrzeuge GmbH, 80809 München (DE)
(72) Erfinder: KLUFTINGER, Andre, 63924 Kleinheubach (DE); LECHNER, Klaus, 91362 Pretzfeld (DE); BLESSING, Michael, 80687 München (DE); KLEIN, Günter, 72669 Unterensingen (DE)
(86) Internationale Anmeldenummer: PCT/EP2019/050285
(87) Internationale Veröffentlichungsnummer: WO 2019/137888

(56) Entgegenhaltungen:
- DE-A1- 19 744 673
- DE-B3- 102004 016 430
- DE-C2- 19 580 281
- DE-C2- 19 744 673
- DE-U1- 202010 009 785
- GB-A- 2 361 284
- US-A1- 2004 119 464
- US-A1- 2004 126 562

## Beschreibung

Die Erfindung betrifft einen Geschwindigkeitssensor zum Messen einer Geschwindigkeit eines sich relativ zu dem Geschwindigkeitssensor bewegenden rotierenden Objekts, gemäß dem Oberbegriff von Anspruch 1.

Die Erfindung betrifft auch ein Fahrerassistenzsystem, insbesondere eine Bremsschlupfregelung (ABS), eine Antriebsschlupfregelung (ASR), eine Fahrdynamikregelung (ESP), eine adaptive Geschwindigkeitsregelung (ACC) oder eine Fahrzeugnachfolgeregelung, welche wenigstens einen Geschwindigkeitssensor beinhaltet, gemäß Anspruch 10.

Nicht zuletzt betrifft die Erfindung auch ein Kraftfahrzeug mit einem Fahrerassistenzsystem, gemäß Anspruch 11.

Derartige Geschwindigkeitssensoren sind dafür vorgesehen, um bei sich bewegenden Maschinenteilen - wie z. B. Zahnrädern - deren Geschwindigkeit bzw. Drehzahl festzustellen und über eine angeschlossene elektrische Leitung ein entsprechendes Signal einer Elektronik zur weiteren Verarbeitung zuzuführen. Ein solcher Geschwindigkeitssensor kann beispielsweise durch einen Raddrehzahlsensor repräsentiert, welcher die Drehzahl eines Fahrzeugrades eines Kraftfahrzeugs im Rahmen einer Bremsschlupfregelung erfasst.

Bekannt sind passive Geschwindigkeitssensoren und aktive Geschwindigkeitssensoren. Aktive Geschwindigkeitssensoren sind Messfühler, die intern verstärkende oder signalformende Bauelemente enthalten und mit einer Stromversorgung betrieben werden. Das Sensorsignal kann direkt durch seine im Sensor integrierte Elektronik ein Rechtecksignal ausgeben. Passive Geschwindigkeitssensoren sind dagegen Sensoren die nur passive Elemente (wie eine Induktionsspule mit Induktivität, Kapazität und Widerstand) enthalten. Die Signale werden in den meisten Fällen als analoge Spannung ausgegeben und folgen normalerweise einer Sinusspannung deren Frequenz sich entsprechend zur Drehzahl ändert.

Drehzahlsensoren bei einer Bremsschlupfregelung können demzufolge "passiv" oder "aktiv" sein. Drehzahlsensoren ohne permanent anliegende Stromversorgung ("passive" Induktionsspule) werden daher als "Passiv" bezeichnet. Drehzahlsensoren deren "aktives" elektronisches Bauteil permanent an der Stromversorgung anliegt mit z.B. dem Wirkprinzip des "Halleffekts" werden als "Aktiv" bezeichnet.

Dabei kann es im Einsatz von solchen Geschwindigkeitssensoren vorkommen, dass aus der Umgebung (z.B. beim Verbau nahe einer Bremsscheibe) bzw. von dem sich bewegenden Objekt eine relativ große Wärmeenergie auf den Geschwindigkeitssensor übertragen wird, was vor allem bei den oben beschriebenen aktiven Geschwindigkeitssensoren, bei welchen das Sensorelement eine integrierte Auswerteelektronik umfasst, von Nachteil ist. Durch Überhitzung können solche Geschwindigkeitssensoren Fehlmessungen hervorrufen oder ausfallen.

DE 195 80 281 C2 offenbart einen Magnetsensor mit einem Substrat mit einem magnetfeldempfindlichen Element als Geschwindigkeitssensorelement, welches vorne auf elektrische Leiter eines Trägers aufgesteckt ist. DE 197 44 673 A1 beschreibt einen Drehzahlsensor, bei welchem das als Hall-Chip ausgebildete Geschwindigkeitssensorelement zwischen Halbschalen gehalten ist, welche in ein Kunststoffgehäuse eingespritzt sind. Ein weiterer Geschwindigkeitssensor wird ein DE 43 31 969 C2 beschrieben. US 2004/0119464 A1 offenbart einen Geschwindigkeitssensor, bei welchem ein Hall-Element von einem in einem Gehäuse aufgenommenen Träger gelagert ist. Zwischen dem Träger und dem Gehäuse sind leere äußere Kammern ausgebildet. Die gattungsbildende DE 2004 016 430 B3 offenbart einen als Spritzgussformling ausgebildeten Träger, auf dem ein Hall-Chip angeordnet bist.

Der vorliegenden Erfindung liegt demzufolge die Aufgabe zugrunde, einen Geschwindigkeitssensor der oben beschriebenen Art derart weiter zu entwickeln, dass er eine hohe Funktionssicherheit aufweist. Weiterhin soll auch ein Fahrzeugassistenzsystem mit wenigstens einem solchen Geschwindigkeitssensor und auch ein Fahrzeug mit einem solchen Fahrzeugassistenzsystem zur Verfügung gestellt werden.

Diese Aufgabe durch die Merkmale der Ansprüche 1, 10 und 11 gelöst.

### Offenbarung der Erfindung

Die Erfindung stellt einen Geschwindigkeitssensor zum Messen einer Geschwindigkeit eines sich relativ zu dem Geschwindigkeitssensor bewegenden rotierenden Objekts zur Verfügung, mit einem Geschwindigkeitssensor-Gehäuse, welches zum gleit-und/oder reib- und/oder formschlüssigen Einsetzen in eine stationäre Aufnahme ausgebildet ist, wobei der Geschwindigkeitssensor ein Drehzahlsensor ist, und wobei das Geschwindigkeitssensorelement ein Hallelement sowie einen Halbleiterchip zum Abtasten von Veränderungen in einem magnetischen Feld umfasst, und wobei an einer zu dem rotierenden Objekt weisenden endseitigen Stirnfläche der Umfangsfläche eines Spritzgussformlings eine stirnseitige äußere Ausnehmung ausgebildet ist, und wobei der Spritzgussformling an seiner zu einer inneren Fläche einer Wandung des Geschwindigkeitssensor-Gehäuses weisenden äußeren Umfangsfläche wenigstens eine äußere Ausnehmung aufweist, wobei zwischen einer Begrenzungsfläche einer äußeren Ausnehmung und der inneren Fläche der Wandung des Geschwindigkeitssensor-Gehäuses jeweils eine leere äußere Kammer ausbildet wird, und wobei das Geschwindigkeitssensor-Gehäuse becherförmig ausgebildet ist und an seinem zu dem rotierenden Objekt weisenden Ende einen Geschwindigkeitssensor-Gehäuseboden aufweist, und wobei zwischen der Bodenfläche der stirnseitigen äußeren Ausnehmung und dem Geschwindigkeitssensor-Gehäuseboden eine stirnseitige leere äußere Kammer ausgebildet wird, und wobei wenigstens eine leere äußere Kammer evakuiert, mit Luft unter Umgebungsdruck gefüllt oder teilevakuiert ist. Weiterhin umhaust das Geschwindigkeitssensor-Gehäuse den Spritzgussformling aus Kunststoff, in welchen das Geschwindigkeitssensorelement eingespritzt ist, und in der Bodenfläche der stirnseitigen äußeren Ausnehmung ist das Geschwindigkeitssensorelement angeordnet.

Dann ist das Geschwindigkeitssensorelement durch diese stirnseitige leere äußere Kammer besonders effektiv gegenüber dem rotierenden Objekt wärmeisoliert.

Daher ist das Geschwindigkeitssensorelement beim Urformen des Spritzgussformlings aus Kunststoff in einem Arbeitsgang in den Spritzgussformling eingespritzt. Dabei können elektrische Kabel aus dem Spritzgussformling herausragen, welche mit dem wenigstens einen Teil des Geschwindigkeitssensorelements elektrisch verbunden sind, um die von dem Geschwindigkeitssensorelement erfassten Geschwindigkeitssignale beispielsweise an eine Elektronik zur weiteren Verarbeitung weiter zu leiten.

Bei dem Geschwindigkeitssensorelement handelt es sich um ein oben beschriebenes aktives Geschwindigkeitssensorelement.

Insbesondere sind mehrere voneinander beabstandete und voneinander getrennte äußere Ausnehmungen in oder an der äußeren Umfangsfläche des

Spritzgussformlings ausgebildet. Optional können auch mehrere voneinander beabstandete und voneinander getrennte innere Ausnehmungen innerhalb des Spritzgussformlings vorhanden sein.

Unter einer Begrenzungsfläche einer äußeren Ausnehmung soll die Fläche der äußeren Ausnehmung verstanden werden, welche in die leere äußere Kammer weist und beispielsweise eine Bodenfläche der äußeren Ausnehmung umfasst. Insbesondere mit Ausnahme der wenigstens einen leeren äußeren Ausnehmung ist die äußere Umfangsfläche des Spritzgussformlings glatt ausgebildet und beispielsweise zylindrisch.

Eine leere innere oder äußere Kammer dient dann insbesondere nicht zur Aufnahme weiterer Bauelemente wie beispielsweise einen Dichtring, sondern bildet eine Isolierkammer aus.

Eine solche leere innere oder äußere Kammer vermindert ähnlich einem Dewargefäß die drei möglichen Wärmeübertragungsprozesse Wärmeleitung, Wärmestrahlung und Konvektion. Die Wärmeleitung wird sowohl durch die Luft bzw. das Vakuum in der leeren inneren oder äußeren Kammer beeinflusst, denn Luft bzw. ein Vakuum hat eine geringe Wärmeleitfähigkeit. Ebenso verringert Luft bzw. ein Vakuum in der leeren inneren oder äußeren Kammer den Wärmetransport durch Strahlung. Eine bevorzugte Evakuierung einer leeren inneren oder äußeren Kammer verhindert einen Wärmetransport durch Konvektion.

Wenn wenigstens eine leere innere oder äußere Kammer evakuiert oder teilevakuiert ist, so führt dies zu einer Verminderung der Wärmeübertragungsprozesse zwischen der Wandung des Geschwindigkeitssensor-Gehäuses und dem Spritzgussformling bzw. innerhalb des Spritzgussformlings.

Dabei können selbstverständlich mehrere solche leeren inneren oder äußeren Ausnehmungen bzw. inneren oder äußeren Kammern an der äußeren Umfangsfläche des Spritzgussformlings bzw. innerhalb des Spritzgussformlings ausgebildet sein, was einen Wärmeübergang von der Wandung des Geschwindigkeitssensor-Gehäuses, welche sich durch (direkten) Kontakt mit der Aufnahme des Geschwindigkeitssensors erwärmen kann und dem Spritzgussformling bzw. eine Wärmeleitung innerhalb des Spritzgussformlings in vorteilhafter Weise erschwert. Dadurch sinkt die auf den Spritzgussformling und damit auf den wenigstens einen Teil des Geschwindigkeitssensorelements wirkende Wärmebelastung, was dessen Funktionssicherheit erhöht. Weiterhin behindern innerhalb des Spritzgussformlings ausgebildete leere Kammern eine Wärmeleitung innerhalb des Spritzgussformlings und damit in den dort eingespritzten Geschwindigkeitssensor.

Durch die in den Unteransprüchen aufgeführten Maßnahmen sind vorteilhafte Weiterbildungen und Verbesserungen des ersten Aspekts der Erfindung möglich.

Insbesondere kann das Geschwindigkeitssensor-Gehäuse wenigstens teilweise zylindrisch hülsenförmig und der Spritzgussformling wenigstens teilweise als zylindrischer Vollkörper ausgebildet sein, insbesondere in einem Überschneidungsbereich, in welchem die wenigstens eine leere Kammer ausgebildet ist.

Die innere oder äußere Ausnehmung kann den Spritzgussformling lediglich teilweise, aber nicht vollständig durchdringen. Alternativ ist aber auch eine vollständige Durchdringung des Spritzgussformlings durch die wenigstens eine innere oder äußere Ausnehmung denkbar.

Besonders bevorzugt ist das Geschwindigkeitssensor-Gehäuse als Klemmhülse ausgeführt. Dies bedeutet beispielsweise, dass das Geschwindigkeitssensor-Gehäuse nach außen elastisch vorstehende Anteile aufweist, welche sich beim Einsetzen in die Aufnahme verformen und dadurch einen Reibschluss zwischen einer inneren Oberfläche der Aufnahme, beispielsweise einer Bohrung und einer äußeren Oberfläche des vorstehenden elastischen Anteils des Geschwindigkeitssensor-Gehäuses hervorrufen. Durch diesen Reibschluss alleine und zusammen mit einem optionalen zusätzlichen Formschluss kann dann der Geschwindigkeitssensor in der Aufnahme gehalten werden.

Insbesondere kann das Geschwindigkeitssensor-Gehäuse aus Stahlblech gefertigt sein.

Besonders bevorzugt kann zwischen dem Geschwindigkeitssensor-Gehäuse und dem Spritzgussformling wenigstens ein Dichtungselement angeordnet sein, welches die wenigstens eine äußere Kammer gegenüber der Umgebung abdichtet. Folglich verhindert das wenigstens eine Dichtungselement, dass die wenigstens eine leere und beispielsweise evakuierte äußere Kammer sich mit Luft aus der Umgebung füllt.

Gemäß einer Weiterbildung kann das rotierende Objekt beispielsweise einen Rotor mit Permanentmagneten oder ferromagnetischen Zähnen treiben, welche an einem Umfang des Rotors derart angeordnet sind, dass sich ihre Pole bzw. Zahn und Lücke abwechseln.

Der Rotor mit den Permanentmagneten bildet dann insbesondere einen Bestandteil des Geschwindigkeitssensors, weil dann das Messprinzip des Geschwindigkeitssensors darauf basiert, dass eine Drehung des Rotors eine pulsförmige Änderung in dem magnetischen Feld erzeugt, welche ein Wechselspannungssignal an einem Ausgangsanschluss des statischen Teils des Geschwindigkeitssensors hervorruft, welcher in diesem Fall als Geschwindigkeitssensorelement ein Hallelement sowie einen Halbleiterchip zum Abtasten von Veränderungen in dem magnetischen Feld umfasst. Zusätzlich wird das Signal durch den Halbleiterchip verstärkt und für die entsprechende Schnittstelle konditioniert. Dies kann zum Beispiel eine Stromschnittstelle mit Protokoll sein.

Je weiter das Geschwindigkeitssensorelement von seinem rotierenden Objekt entfernt wird, desto niedriger ist das von ihm sensierbare Signal. Dieser technische Widerspruch wird vorteilhaft durch ein bevorzugtes Vorsehen eines ferromagnetisch leitenden Koppelelements gelöst. Das Koppelelement aus ferromagnetischem Material erstreckt sich beispielsweise axial vom Geschwindigkeitssensorelement bis in die stirnseitige äußere Ausnehmung des Spritzgussformlings hinein.

Dieses Koppelelement kann in einer vorteilhaften Ausführung mit Kühlrippen ausgestattet sein, welche den Wärmefluss auf das Geschwindigkeitssensorelement reduzieren. Als weitere vorteilhafte Eigenschaft kann das Koppelelement an wenigstens einem Ende eine Verjüngung aufweisen, welche zur Konzentration des elektrischen Felds im Geschwindigkeitssensorelement dient.

Die Erfindung betrifft auch ein Fahrerassistenzsystem eines Kraftfahrzeugs, beispielsweise eine Bremsschlupfregelung (ABS), eine Antriebsschlupfregelung (ASR), eine Fahrdynamikregelung (ESP), eine adaptive Geschwindigkeitsregelung (ACC) oder eine Fahrzeugnachfolgeregelung zum wenigstens teilautonomen Fahren, welche oder welches mit einem oben beschriebenen Geschwindigkeitssensor versehen ist, sowie auch ein Kraftfahrzeug mit einem solchen Fahrerassistenzsystem.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig. 1A: eine Querschnittsansicht einer bevorzugten Ausführungsform eines Geschwindigkeitssensors gemäß der Erfindung;
- Fig. 1B: eine Querschnittsansicht einer bevorzugten Ausführungsform eines Geschwindigkeitssensors gemäß der Erfindung mit einem Koppelelement zur Leitung des magnetischen Flusses;
- Fig. 1C: eine Querschnittsansicht einer bevorzugten Ausführungsform des Koppelelements zur Leitung des magnetischen Flusses von Fig. 1b;
- Fig.2: eine Querschnittsansicht einer weitren Ausführungsform eines Geschwindigkeitssensors gemäß der Erfindung;
- Fig.3: eine perspektivische teilaufgebrochene Ansicht des Geschwindigkeitssensors von Fig.1.

### Beschreibung der Ausführungsbeispiele

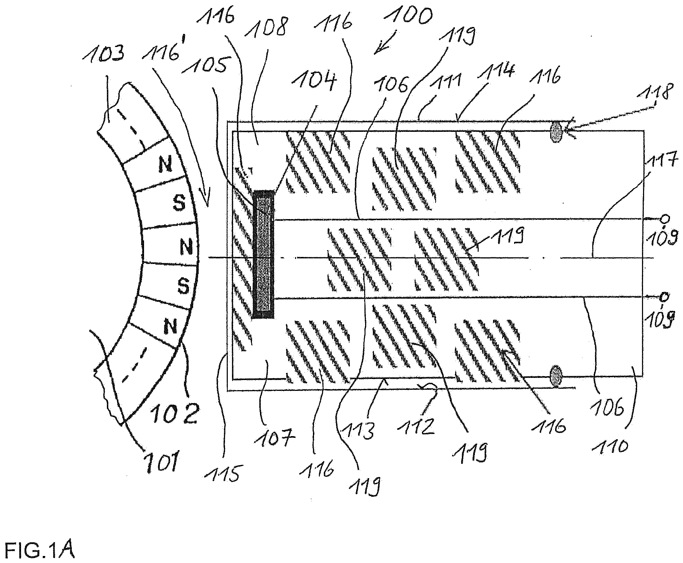

In **Fig. 1A** ist eine bevorzugte Ausführungsform eines hier beispielsweise als Raddrehzahlsensor ausgeführten Geschwindigkeitssensors 100 zur Messung der Raddrehzahl eines Rades eines Kraftfahrzeugs dargestellt. Der Geschwindigkeitssensor 100 wird hier beispielsweise in einem Antiblockiersystem (ABS) verwendet.

Der Geschwindigkeitssensor 100 umfasst einen Hall-IC 104, der mit einem Rotor 101 des Geschwindigkeitssensors 100 zusammenwirkt, der am Rad des Kraftfahrzeugs montiert ist, um sich synchron mit diesem zu drehen. Der Rotor 101 besitzt einen Ring 103 mit einer Mehrzahl von Permanentmagneten 102, die am Umfang des Rotors 101 so angeordnet sind, dass sich ihre Pole abwechseln, so dass sie eine pulsförmige Änderung im magnetischen Fluss bei der Rotation des Rotors 101 erzeugen. Der stationäre Hall-IC 104 umfasst ein Hall-Element 105, sowie weitere, hier nicht explizit gezeigte Bauelemente. Das Hall-Element 105 ist daher magnetisch in einen Magnetkreis der Permanentmagneten 102 eingekoppelt. Das Hall-Element 105 wird durch eine hier nicht gezeigte Spannungsleitung mit Spannung versorgt und über eine ebenfalls nicht gezeigte Erdleitung geerdet. Das Hall-Element 105 und der Hall-IC 104 bilden hier beispielsweise eine bauliche Einheit, wobei das Hall-Element 105 zu dem Rotor 101 weist.

Das Hall-Element 105 erzeugt als Ergebnis der Änderungen im magnetischen Fluss, die durch die Rotation des Rotors 101 erzeugt werden, ein Wechselspannungssignal an seinen Ausgangsanschluss, welcher hier mit einer Auswerteelektronik des Hall-IC's 104 verbunden ist, welche dann Ausgangssignale in ein Signalkabel einsteuert, bei welchen die Wellenform des daran angelegten Wechselspannungssignals in eine standardisierte Signalform umgewandelt wird. Das Messprinzip eines solchen Hall-IC's 104 ist hinlänglich bekannt und soll deshalb hier nicht weiter erläutert werden. Der Hall-IC 104 und das Hall-Element 105 bilden beispielsweise hier eine bauliche Einheit und sind zusammen mit dem Signalkabel 106 vollständig in einen Spritzgussformling 107 eingespritzt, welcher hier beispielsweise einen zylindrischen Vollkörper ausbildet. Dabei ist die Baueinheit aus Hall-Element 105 und Hall-IC 104 insbesondere in dem zu dem Rotor 101 weisenden Ende 108 des Spritzgussformlings 107 angeordnet, während Anschlüsse 109 des Signalkabels 106 aus dem anderen Ende 110 des Spritzgussformlings 107 herausragen, an welche dann ein Kabel angeschlossen ist und Raddrehzahlsignale in eine hier nicht dargestellte externe ABS-Regelungselektronik zur Weiterverarbeitung einsteuert. Der Spritzgussformling 107 kann aus einem beliebigen, zum Spritzen geeigneten Kunststoffmaterial durch Spritzgießen hergestellt sein.

Der Spritzgussformling 107 aus Kunststoff ist hier beispielsweise teilweise innerhalb eines Geschwindigkeitssensor-Gehäuses 111 angeordnet oder gehaust, wobei hier beispielsweise lediglich das von dem Rotor 101 weg weisende Ende 110 des Spritzgussformlings 107 noch aus dem Geschwindigkeitssensor-Gehäuse 111 herausragt.

Das Geschwindigkeitssensor-Gehäuse 111 ist hier beispielsweise becherförmig und zylindrisch ausgebildet und beispielsweise durch Tiefziehen eines Stahlblechs entstanden. Dabei ist der Außendurchmesser des Spritzgussformlings 107 beispielsweise geringfügig kleiner als ein Innendurchmesser einer radial inneren Umfangsfläche 112 der Wandung des Geschwindigkeitssensor-Gehäuses 111, so dass die radial innere Umfangsfläche 112 der Wandung des Geschwindigkeitssensor-Gehäuses 111 im Wesentlichen eine radial äußere Umfangsfläche 113 des Spritzgussformlings kontaktiert.

Der Geschwindigkeitssensor 100 ist dann mit der radial äußeren Umfangsfläche 114 seines Geschwindigkeitssensor-Gehäuses 111 in eine hier nicht gezeigte zylindrische Bohrung einer stationären Aufnahme z.B. mit einer Klemhülse verschiebbar eingesetzt, welche mit einem Fahrwerk des Kraftfahrzeugs verbunden ist, an welchem das betreffende Rad drehbar gelagert ist.

Das dem Rotor 101 gegenüberliegende Ende 108 des Spritzgussformlings 107, in welchem der Hall-IC 104 und das Hall-Element 105 integriert sind, ist dann von einem Geschwindigkeitssensorgehäuse-Boden 115 des becherförmigen Geschwindigkeitssensor-Gehäuses 111 eingefasst bzw. umgeben. Zwischen dem Geschwindigkeitssensorgehäuse-Boden 115 und dem Rotor 101 ist dann ein lichter oder wirksamer Luftspalt 116' ausgebildet.

Der Spritzgussformling 107 weist an seiner zur radial inneren Umfangsfläche 112 der Wandung des Geschwindigkeitssensor-Gehäuses 111 weisenden radial äußeren Umfangsfläche 113 hier beispielsweise mehrere voneinander beabstandete radial äußere Ausnehmungen 116 auf, wobei zwischen einer Begrenzungsfläche jeder dieser äußeren Ausnehmungen 116 und der radial inneren Umfangsfläche 112 der Wandung des Geschwindigkeitssensor-Gehäuses 111 jeweils eine leere Kammer ausbildet wird. "Leere Kammer" bedeutet, dass dort kein weiteres Bauelement angeordnet ist, wie beispielsweise eine Dichtung. Eine "leere Kammer" kann aber mit Luft unter Umgebungsdruck gefüllt, evakuiert oder auch teilevakuiert sein.

Insbesondere an einer zu dem Rotor 101 weisenden Stirnfläche der Umfangsfläche des Spritzgussformlings 107 ist eine hier beispielsweise scheibenförmige und mit einer Mittelachse 117 des Geschwindigkeitssensors 100 koaxiale stirnseitige äußere Ausnehmung 116 ausgebildet, in deren Boden das Hall-Element 105 so angeordnet ist, dass eine Sensorfläche des Hall-Elements 105 in die stirnseitige Ausnehmung hinein weist oder hinein ragt.

Weiterhin kann zwischen der Bodenfläche der stirnseitigen äußeren Ausnehmung 116 des Spritzgussformlings 107 und dem Geschwindigkeitssensorgehäuse-Boden 115 eine stirnseitige leere äußere Kammer ausgebildet sein. Dann sind das Hall-Element 105 und der Hall-IC 104 durch diese stirnseitige leere äußere Kammer besonders effektiv gegenüber dem Rotor 101 wärmeisoliert.

Weiterhin ist ein hier beispielsweise als umlaufender Dichtring ausgeführtes Dichtelement 118 zwischen der radial inneren Umfangsfläche 112 der Wandung des Geschwindigkeitssensor-Gehäuses 111 und der radial äußeren Umfangsfläche 114 des Spritzgussformlings 107 angeordnet, so dass die leeren äußeren Kammern 116 gegenüber der Umgebung abgedichtet sind.

Neben den leeren äußeren Ausnehmungen 116 oder anstatt dieser können im Inneren des Spritzgussformlings 107 innere leere Ausnehmungen 119 ausgebildet sein, welche dann innere leere Kammern ausbilden. Diese inneren leeren Ausnehmungen 119 sind dann ebenfalls voneinander getrennt bzw. voneinander beabstandet.

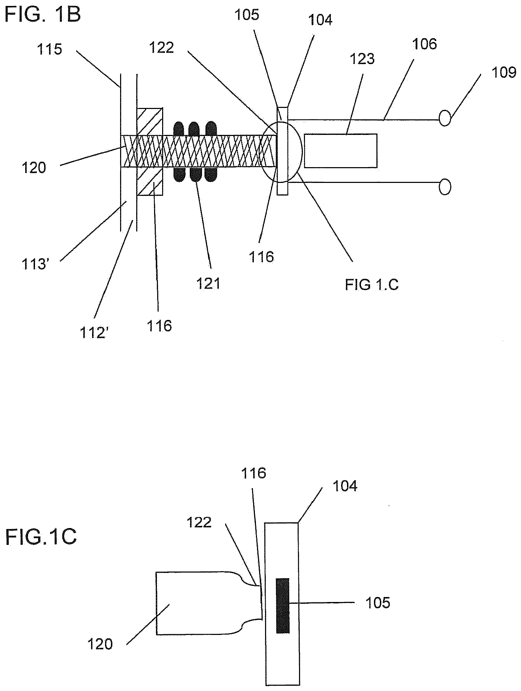

Fig. 1B zeigt eine weitere Ausführungsform, welche die Nachteile kompensiert, welche aus der stirnseitigen leeren äußeren Kammer resultieren, die auch hier zwischen der stirnseitigen äußeren Ausnehmung 116 des Spritzgussformlings 107 und dem Geschwindigkeitssensorgehäuse-Boden 115 ausgebildet ist, weil diese leere äußere Kammer eine Vergrößerung des effektiven Luftspalts 116' bewirkt und deshalb das Signal im Hall-Element 105 des Hall-IC's 104 schwächen könnte. Zur Kompensation der Signalabschwächung ist hier ein aus ferromagnetischem Material bestehendes Koppelelement 120 vorgesehen, welches sich hier axial beispielsweise vom Hall-IC 104 bis in die stirnseitige äußere Ausnehmung 116 des Spritzgussformlings 107 hineinerstreckt. Dieses Koppelelement verstärkt infolge seines ferromagnetischen Materials den magnetischen Fluss und damit auch das Signal des Hall-IC's 104.

Das Koppelelement 120 kann zusätzlich mit Kühlrippen 121 und zur Fokussierung des Magnetfelds an mindestens einem Ende eine Verjüngung 122 aufweisen, wie in **Fig. 1C** gezeigt ist. Für einen Einsatz an ferromagnetischen Polrädern kann zum Vorspannen des Hall-Elements 105 ein Magnet 123 hingefügt werden. Weiterhin ist in **Fig.1B** mit 112' ist eine innere Umfangsfläche der Sensorspitze und mit 113' eine äußere Umfangsfläche der Sensorspitze bezeichnet.

**Fig.1C** veranschautlicht in einer vergrößerten Darstellung den Übergang des Koppelelements 120 mit dessen verjüngtem Ende 122 zur Fokusierung des magnetischen Flusses im Hall-Element 105 des Hall-IC's 104, sowie der optionalen thermischen Entkopplung 116.

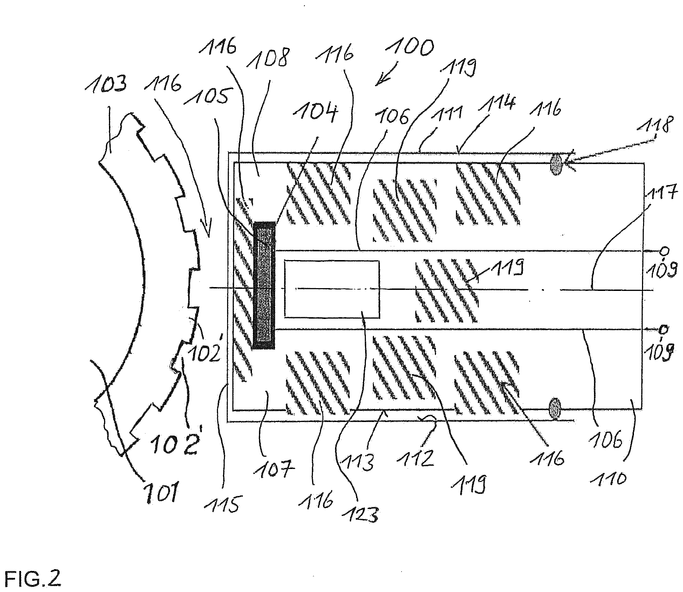

**Fig.2** zeigt eine weitere Ausführungsform eines hier ebenfalls beispielsweise als Raddrehzahlsensor ausgeführten Geschwindigkeitssensors 100, bei welchem anstatt eines magnetisch codierten Rotors 101 oder Rings 103 wie in **Fig. 1A** ein ferromagnetisch mit Zähnen und Lücken 102' codierter Rotor 101 vorhanden ist. Um das Hall- Element 105 magnetisch vorzuspannen, wird beispielsweise ein zusätzlicher Permanentmagnet 123 herangezogen.

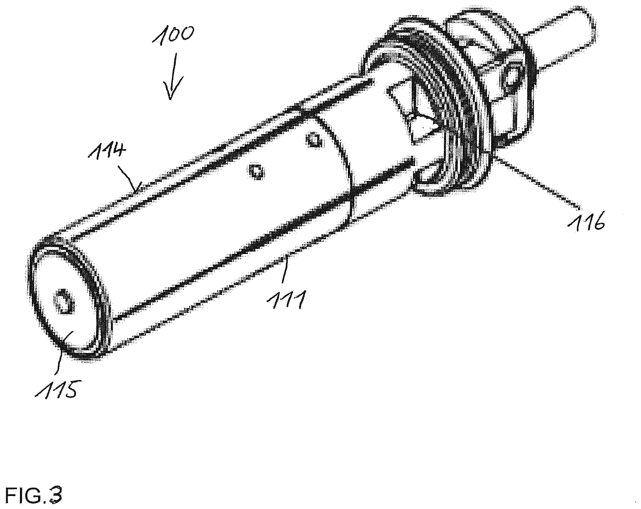

**Fig.3** zeigt in einer aufgebrochenen Darstellung des Geschwindigkeitssensors 100, in welcher das Geschwindigkeitssensor-Gehäuse 111 stellenweise entfernt wurde, ein Beispiel für eine äußere Ausnehmung 116, welche bevorzugt den Spritzgussformling 107 lediglich teilweise durchdringt und deshalb auch ähnlich einem Sackloch als Begrenzungsfläche eine Bodenfläche aufweist.

Die solchermaßen gebildeten leeren inneren und äußeren Kammern dienen dann insbesondere nicht zur Aufnahme weiterer Bauelemente wie beispielsweise Dichtringen, sondern bilden jeweils leere Isolierkammern aus. Insbesondere sind die leeren inneren und äußeren Kammern evakuiert und die äußeren Kammern insbesondere dann durch den Dichtring 118 gegenüber der Umgebung abgedichtet, so dass keine Luft in die äußeren Kammern von außen her eindringen kann.

### BEZUGSZEICHENLISTE

- 100: Geschwindigkeitssensor
- 101: Rotor
- 102: Permanentmagneten
- 102': Zahn/Lücke
- 103: Ring
- 104: Hall-IC
- 105: Hall-Element
- 106: Signalkabel
- 107: Spritzgußformling
- 108: Ende
- 109: Anschlüsse
- 110: Ende
- 111: Geschwindigkeitssensor-Gehäuse
- 112: radial innere Umfangsfläche
- 112': Sensorspitze innere Umfangsfläche
- 113: radial äußere Umfangsfläche
- 113': Sensorspitze äußere Umfangsfläche
- 114: radial äußere Umfangsfläche
- 115: Geschwindigkeitssensor-Gehäuseboden
- 116: äußere Ausnehmungen
- 116': Luftspalt zwischen Sensor und Rotor
- 117: Mittelachse
- 118: Dichtring
- 119: innere Ausnehmungen
- 120: Koppelelement für magnetischen Fluß
- 212: Kühlrippen zur Abführung von Wärmeenergie
- 122: Verjüngung des Koppelelements zur Fokussierung des magnetischen Flusses
- 123: Permanentmagnet

## Patentansprüche

1. Geschwindigkeitssensor (100) zum Messen einer Geschwindigkeit eines sich relativ zu dem Geschwindigkeitssensor (100) bewegenden rotierenden Objekts, mit einem Geschwindigkeitssensor-Gehäuse (111), welches zum gleit-und/oder reib- und/oder formschlüssigen Einsetzen in eine stationäre Aufnahme ausgebildet ist, wobei
a) der Geschwindigkeitssensor (100) ein Drehzahlsensor ist, und wobei
b) das Geschwindigkeitssensorelement ein Hallelement (105) sowie einen Halbleiterchip (104) zum Abtasten von Veränderungen in einem magnetischen Feld umfasst, und wobei
c) an einer zu dem rotierenden Objekt weisenden endseitigen Stirnfläche der Umfangsfläche eines Spritzgussformlings (107) eine stirnseitige äußere Ausnehmung (116) ausgebildet ist, und wobei
d) der Spritzgussformling (107) an seiner zu einer inneren Fläche (112) einer Wandung des Geschwindigkeitssensor-Gehäuses (111) weisenden äußeren Umfangsfläche (113) wenigstens eine äußere Ausnehmung (116) aufweist, wobei zwischen einer Begrenzungsfläche einer äußeren Ausnehmung (116) und der inneren Fläche (112) der Wandung des Geschwindigkeitssensor-Gehäuses (111) jeweils eine leere äußere Kammer ausbildet wird, und wobei
e) das Geschwindigkeitssensor-Gehäuse (111) becherförmig ausgebildet ist und an seinem zu dem rotierenden Objekt weisenden Ende einen Geschwindigkeitssensor-Gehäuseboden (115) aufweist, und wobei
f) zwischen der Bodenfläche der stirnseitigen äußeren Ausnehmung (116) und dem Geschwindigkeitssensor-Gehäuseboden (115) eine stirnseitige leere äußere Kammer ausgebildet ist, und wobei
g) wenigstens eine leere äußere Kammer evakuiert, mit Luft unter Umgebungsdruck gefüllt oder teilevakuiert ist, **dadurch gekennzeichnet, dass**
h) das Geschwindigkeitssensor-Gehäuse (111) den Spritzgussformling (107) aus Kunststoff umhaust, in welchen das Geschwindigkeitssensorelement eingespritzt ist, und dass
i) in der Bodenfläche der stirnseitigen äußeren Ausnehmung (116) das Geschwindigkeitssensorelement angeordnet ist, und dass
j) ein Koppelelement (120) aus ferromagnetischem Material vorhanden ist, welches sich axial vom Geschwindigkeitssensorelement bis in die stirnseitige äußere Ausnehmung (116) des Spritzgussformlings (107) hineinerstreckt.

2. Geschwindigkeitssensor nach Anspruch 1, **dadurch gekennzeichnet, dass** das Geschwindigkeitssensor-Gehäuse (111) wenigstens teilweise zylindrisch hülsenförmig und der Spritzgussformling (107) wenigstens teilweise als zylindrischer Vollkörper ausgebildet ist.

3. Geschwindigkeitssensor nach einem der vorhergehenden Ansprüche, **dadurch gekennzeichnet, dass** das wenigstens eine Geschwindigkeitssensorelement (104, 105) ein aktives Sensorelement darstellt.

4. Geschwindigkeitssensor nach einem der vorhergehenden Ansprüche, **dadurch gekennzeichnet, dass** die äußere Ausnehmung (119) den Spritzgussformling (107) lediglich teilweise, aber nicht vollständig durchdringt.

5. Geschwindigkeitssensor nach einem der vorhergehenden Ansprüche, **dadurch gekennzeichnet, dass** das Geschwindigkeitssensor-Gehäuse (111) als Klemmhülse ausgeführt ist.

6. Geschwindigkeitssensor nach einem der vorhergehenden Ansprüche, **dadurch gekennzeichnet, dass** das Geschwindigkeitssensor-Gehäuse (111) aus einem Stahlblech gefertigt ist.

7. Geschwindigkeitssensor nach einem der vorhergehenden Ansprüche, **dadurch gekennzeichnet, dass** zwischen dem Geschwindigkeitssensor-Gehäuse (111) und dem Spritzgussformling (107) wenigstens ein Dichtungselement (118) angeordnet ist, welches die wenigstens eine äußere Kammer gegenüber der Umgebung abdichtet.

8. Geschwindigkeitssensor nach einem der vorhergehenden Ansprüche, **dadurch gekennzeichnet, dass** das Koppelelement (120) Kühlrippen (121) aufweist.

9. Geschwindigkeitssensor nach einem der vorhergehenden Ansprüche, **dadurch gekennzeichnet, dass** das Koppelelement (120) zur Fokussierung des Magnetfelds an mindestens einem Ende eine Verjüngung (122) aufweist.

10. Fahrerassistenzsystem, insbesondere Bremsschlupfregelung, ABS, Antriebsschlupfregelung, ASR, Fahrdynamikregelung, ESP, adaptive Geschwindigkeitsregelung, ACC oder Fahrzeugnachfolgeregelung beinhaltend wenigstens einen Geschwindigkeitssensor (100) nach einem der vorhergehenden Ansprüche.

11. Kraftfahrzeug mit einem Fahrerassistenzsystem nach Anspruch 10.

## Claims

1. Speed sensor (100) for measuring a speed of a rotating object moving relative to the speed sensor (100), having a speed sensor housing (111) which is designed to be set in a slide-fitting and/or friction-fitting and/or form-fitting manner into a stationary receptacle, wherein
a) the speed sensor (100) is a rotational speed sensor, and wherein
b) the speed sensor comprises a Hall element (105) and a semiconductor chip (104) for sampling changes in a magnetic field, and wherein
c) on an end face of the peripheral surface of an injection moulded article (107) facing towards the rotating object is formed an end-face outer recess (116), and wherein
d) the injection moulded article (107) has on its outer peripheral surface (113) facing towards an inner surface (112) of a wall of the speed sensor housing (111) at least one outer recess (116), wherein between a delimiting surface of an outer recess (116) and the inner surface (112) of the wall of the speed sensor housing (111) is formed respectively one empty outer chamber, and wherein
e) the speed sensor housing (111) is cup-shaped and has a speed sensor housing base (115) on its end facing towards the rotating object, and wherein
f) between the base surface of the end-face outer recess (116) and the speed sensor housing base (115) is formed an end-face empty outer chamber, and wherein
g) at least one empty outer chamber is evacuated, filled with air under environmental pressure or partially evacuated, **characterized in that**
h) the speed sensor housing (111) encloses the injection moulded article (107) made of plastic, into which the speed sensor element is injected, and that
i) in the base surface of the end-face outer recess (116) is arranged the speed sensor element, and that
j) a coupling element (120) made of ferromagnetic material is present which extends axially from the speed sensor element into the end-face outer recess (116) of the injection moulded article (107).

2. Speed sensor according to claim 1, **characterized in that** the speed sensor housing (111) is at least partially cylindrical-sheath-shaped and the injection moulded article (107) is formed at least partially as a cylindrical solid body.

3. Speed sensor according to any of the preceding claims, **characterized in that** the at least one speed sensor element (104, 105) constitutes an active sensor element.

4. Speed sensor according to any of the preceding claims, **characterized in that** the outer recess (119) penetrates the injection moulded article (107) only partially, but not completely.

5. Speed sensor according to any of the preceding claims, **characterized in that** the speed sensor housing (111) is designed as a clamping sleeve.

6. Speed sensor according to any of the preceding claims, **characterized in that** the speed sensor housing (111) is produced from a steel sheet.

7. Speed sensor according to any of the preceding claims, **characterized in that** between the speed sensor housing (111) and the injection moulded article (107) is arranged at least one sealing element (118) which seals the at least one outer chamber against the environment.

8. Speed sensor according to any of the preceding claims, **characterized in that** the coupling element (120) has cooling ribs (121).

9. Speed sensor according to any of the preceding claims, **characterized in that** the coupling element (120) has at least at one end a tapering (122) for focusing the magnetic field.

10. Driver assistance system, in particular brake slip control, ABS, traction control system, ASR, electronic stability control, ESP, adaptive speed control, ACC or vehicle succession planning including at least one speed sensor (100) according to any of the preceding claims.

11. Motor vehicle having a driver assistance system according to claim 10.

## Revendications

1. Capteur de vitesse (100) pour la mesure d'une vitesse d'un objet rotatif se déplaçant par rapport au capteur de vitesse (100), avec un boîtier de capteur de vitesse (111) qui est conçu pour être inséré par glissement et/ou friction et/ou complémentarité de formes dans un logement stationnaire, dans lequel
a) le capteur de vitesse (100) est un capteur de vitesse de rotation, et dans lequel
b) l'élément de capteur de vitesse comprend un élément à effet Hall (105) ainsi qu'une puce semi-conductrice (104) pour balayer des modifications dans un champ magnétique, et dans lequel
c) un évidement (116) extérieur côté avant est conçu au niveau d'une surface avant côté extrémité tournée vers l'objet rotatif de la surface périphérique d'une ébauche moulée par injection (107), et dans lequel
d) l'ébauche moulée par injection (107) présente au moins un évidement extérieur (116) au niveau de sa surface périphérique (113) extérieure tournée vers une surface intérieure (112) d'une paroi du boîtier de capteur de vitesse (111), dans lequel respectivement une chambre extérieure vide est formée entre une surface de délimitation d'un évidement (116) extérieur et la surface intérieure (112) de la paroi du boîtier de capteur de vitesse (111), et dans lequel
e) le boîtier de capteur de vitesse (111) est conçu en forme de coupe et présente un fond de boîtier de capteur de vitesse (115) au niveau de son extrémité tournée vers l'objet rotatif, et dans lequel
f) une chambre extérieure vide côté avant est formée entre la surface de fond de l'évidement (116) extérieur côté avant et le fond de boîtier de capteur de vitesse (115), et dans lequel
g) au moins une chambre extérieure vide est évacuée, remplie d'air sous la pression ambiante ou évacuée partiellement, **caractérisé en ce**que
h) le boîtier de capteur de vitesse (111) loge l'ébauche moulée par injection (107) en matière plastique, dans laquelle l'élément de capteur de vitesse est injecté, et en ce que
i) l'élément de capteur de vitesse est agencé dans la surface de fond de l'évidement (116) extérieur côté avant, et en ce que
j) un élément de couplage (120) en matériau ferromagnétique qui s'étend axialement de l'élément de capteur de vitesse jusque dans l'évidement (116) extérieur côté avant de l'ébauche moulée par injection (107) est présent.

2. Capteur de vitesse selon la revendication 1, **caractérisé en ce**que le boîtier de capteur de vitesse (111) est conçu au moins partiellement de manière cylindrique en forme de douille, et l'ébauche moulée par injection (107) est conçue au moins partiellement comme corps plein cylindrique.

3. Capteur de vitesse selon l'une quelconque des revendications précédentes**caractérisé en ce**que le au moins un élément de capteur de vitesse (104, 105) représente un élément de capteur actif.

4. Capteur de vitesse selon l'une quelconque des revendications précédentes**caractérisé en ce**que l'évidement (119) extérieur traverse l'ébauche moulée par injection (107) uniquement partiellement, mais pas entièrement.

5. Capteur de vitesse selon l'une quelconque des revendications précédentes, **caractérisé en ce**que le boîtier de capteur de vitesse (111) est conçu comme douille de serrage.

6. Capteur de vitesse selon l'une quelconque des revendications précédentes, **caractérisé en ce**que le boîtier de capteur de vitesse (111) est fabriqué à partir d'une tôle d'acier.

7. Capteur de vitesse selon l'une quelconque des revendications précédentes, **caractérisé en ce**qu'au moins un élément d'étanchéité (118) est agencé entre le boîtier de capteur de vitesse (111) et l'ébauche moulée par injection (107), élément qui rend étanche la au moins une chambre extérieure par rapport à l'environnement.

8. Capteur de vitesse selon l'une quelconque des revendications précédentes, **caractérisé en ce**que l'élément de couplage (120) présente des ailettes de refroidissement (121).

9. Capteur de vitesse selon l'une quelconque des revendications précédentes, **caractérisé en ce**que l'élément de couplage (120) présente un rétrécissement (122) pour focaliser le champ magnétique au niveau d'au moins une extrémité.

10. Système d'aide à la conduite, en particulier système antiblocage des roues, ABS, système antipatinage, ASR, système de contrôle dynamique de la trajectoire, ESP, régulateur de vitesse adaptatif, ACC ou système de suivi de véhicule contenant au moins un capteur de vitesse (100) selon l'une quelconque des revendications précédentes.

11. Véhicule automobile avec un système d'aide à la conduite selon la revendication 10.
